# EUROPEAN PATENT APPLICATION

(11) **EP 4 825 696 A1**
(43) Date of publication of application: **21.10.2026**
(21) Application number: 26171933.0
(22) Date of filing: 13.04.2026
(51) Int. Cl.: B60W 60/00, B60K 6/00

(54) **TUBE-BASED MODEL PREDICTIVE CONTROL TRAJECTORY PLANNING METHOD**

(30) Priority: 17.04.2025 CN 202510486588
(71) Applicant: Robert Bosch GmbH, 70442 Stuttgart (DE)
(72) Inventor: WANG, Huiwen, Suzhou, Jiangsu, 215021 (CN); SONG, Ji, Suzhou, Jiangsu, 215021 (CN)

(57) **Abstract**

The present application relates to a tube-based model predictive control trajectory planning method, the method comprising: collecting environmental information around an ego vehicle, the environmental information comprising obstacle-related information; generating a ref tube representing the drivable space of the ego vehicle based at least on the ego vehicle's steering limitations and the predicted trajectory of the obstacle; and using the centerline of the ref tube as a reference value for the optimization problem when solving the model predictive control optimization problem, thereby generating a trajectory for the ego vehicle so that the ego vehicle can travel along the generated trajectory. The present application further relates to computer program products and electronic devices.

## Description

### Technical Field

The present application relates to the field of autonomous driving technology and, more particularly, to a tube-based model predictive control (MPC) trajectory planning method, an adaptive cruise control method, a computer program product, and an electronic device.

### Background Art

In the field of autonomous driving, path planning is an important step that involves finding a safe, feasible, and efficient path for a vehicle in a given environment from its origin to its destination. In dynamic environments, vehicles need to perceive and respond to changes in their surroundings in real time. Existing path planning methods (e.g., model predictive control algorithms) may not be able to solve optimization problems within a limited time, resulting in untimely path updates, which affects the vehicle's real-time performance. In other words, existing path planning methods have certain limitations, such as excessive computational complexity, and often fail to strike a good balance between accuracy and efficiency.

### Summary of the Invention

The inventors of the present application recognize that, in autonomous driving path planning, the time required to solve the optimization problem is a key factor. Traditional methods, when dealing with complex environments, are computationally intensive, resulting in long solution times and making it difficult to meet real-time requirements. Moreover, traditional methods are typically based on kinematic models that, while simple to calculate, cannot sufficiently capture the dynamic behavior of vehicles, possibly causing the generated paths to be infeasible in actual execution.

To address this issue, the inventors of the present application propose to gradually reduce the search space of the optimization problem by constructing feasible domains (such as hard tubes, soft tubes, and ref tubes), thereby improving solution efficiency. This trajectory planning method not only ensures vehicle safety during driving, but also quickly generates paths that conform to the constraints of vehicle dynamics and take into account the impact of the predicted trajectories of obstacles in complex dynamic environments. By constructing and narrowing the feasible domain appropriately, the solution time of the optimization problem can be significantly reduced while ensuring path safety and feasibility, thereby improving the real-time performance and practicality of the autonomous driving system as a whole.

According to one aspect of the present application, the present application proposes a tube-based model predictive control (MPC) trajectory planning method, the method comprising: collecting environmental information around an ego vehicle, the environmental information comprising obstacle-related information; generating a ref tube representing the drivable space of the ego vehicle based at least on the ego vehicle's steering limitations and the predicted trajectory of the obstacle; and using the centerline of the ref tube as a reference value for the optimization problem when solving the model predictive control optimization problem, thereby generating a trajectory for the ego vehicle so that the ego vehicle can travel along the generated trajectory.

As a supplement to or replacement of the above solution, in the above method, generating a ref tube representing the drivable space of the ego vehicle by combining the ego vehicle's steering limitations and the predicted trajectories of the obstacles comprises: scanning along a reference line to generate a hard tube, wherein the hard tube represents a first path region through which the ego vehicle can safely pass; generating a soft tube based on the hard tube by adding lateral and longitudinal buffer zones, wherein the soft tube represents a second path region through which the ego vehicle can safely pass and the second path region is smaller than the first path region; and generating a ref tube based on the soft tube while considering the influence of the ego vehicle's steering limitations and the predicted trajectory of the obstacle, wherein the ref tube represents a third path region through which the ego vehicle can safely pass and the third path region is smaller than the second path region.

As a supplement to or replacement of the above solution, in the above method, the environmental information further comprises lane boundaries perceived by sensors and the reference line is generated based on the lane boundaries.

As a supplement to or replacement of the above solution, in the above method, the predicted trajectory of the obstacle is determined based on the predicted trajectory of the obstacle.

As a supplement to or replacement of the above solution, in the above method, the optimization problem of the model predictive control is to find the optimal control input by minimizing an objective function, so that the planned trajectory of the ego vehicle is as close as possible to the reference value while satisfying the constraint conditions.

As a supplement to or replacement of the above solution, in the above method, the objective function consists of a position error term, a steering rate change term, an environmental constraint term, and an acceleration constraint term, and the constraint conditions comprise dynamic constraints, steering actuator limitations, acceleration constraints, and environmental constraints.

As a supplement to or replacement of the above solution, in the above method, the environmental information is received from a plurality of sensors, and the method further comprises providing the generated trajectory of the ego vehicle to lateral and longitudinal actuators to control the ego vehicle.

According to another aspect of the present application, a computer program product is provided, comprising a computer program, which, when executed by a processor, performs the above method.

According to yet another aspect of the present application, an electronic device (such as a domain controller, camera, or radar) is provided, comprising a memory, a processor, and a computer program stored on the memory, the processor executing the computing program to implement the above method.

In the tube-based model predictive control trajectory planning solution of the present application, the influence of vehicle dynamic constraints and the predicted trajectories of obstacles is considered in the process of constructing tubes (such as the ref tube). This ensures that the vehicle will not collide with obstacles during driving while narrowing the feasible domain of the optimization problem, thereby quickly generating a collision-free trajectory that meets the dynamic constraints.

In one or more embodiments, the solution of the present application is based on a dynamic model, which is more in line with actual control requirements (control feasible). The dynamic model takes into account dynamic characteristics such as the vehicle's inertia, acceleration, steering rate, and the like and can more accurately describe the vehicle's motion behavior.

In one or more embodiments, solving efficiency is improved by generating hard tubes, soft tubes, and ref tubes to gradually reduce the feasible domain of the optimization problem and reduce the search space of the optimization problem. A smaller feasible domain means that the complexity of the optimization problem is reduced, allowing the solver to more efficiently find the optimal path that satisfies all constraints and meets real-time requirements.

In one or more embodiments, the objective function of the optimization problem integrates position error, steering rate change, environmental constraints, acceleration constraints, and the like and balances different objectives through reasonable weighting coefficients to achieve multi-objective optimization. For example, by optimizing steering rate change and acceleration change, frequent steering of the vehicle during driving is reduced, improving passenger comfort. In addition, slack variables are introduced when solving optimization problems, allowing for slight violations of constraints in infeasible situations, thus ensuring that a feasible solution can be found for the optimization problem.

Model predictive control algorithms consider only the optimization problem within a finite time range at each time step, which may cause the vehicle to get stuck in a local optimum rather than a global optimum. In one or more embodiments, the tube-based model predictive control (MPC) trajectory planning solution of the embodiments of the present application relies on a reference line provided by global path planning to generate hard tubes, soft tubes, and ref tubes, thereby obtaining a globally optimal solution.

### Brief Description of the Drawings

The foregoing and other objectives and advantages of the present application will become more fully apparent from the following detailed description taken in conjunction with the accompanying drawings, in which identical or similar elements are denoted by the same reference numerals.
Fig. 1 shows a flowchart of a tube-based model predictive control trajectory planning method according to one embodiment of the present application;
Fig. 2 shows a schematic diagram of a hard tube, a soft tube, and a ref tube according to one embodiment of the present application; and
Fig. 3 shows a schematic structural diagram of an electronic device according to one embodiment of the present application.

### Detailed Description of the Embodiments

In the following, a tube-based model predictive control trajectory planning solution according to various exemplary embodiments of the present application will be described in detail with reference to the accompanying drawings.

In the description of this specification, descriptions referring to terms such as "one embodiment," "some embodiments," "example," "specific example," or "some examples" mean that specific features, structures, materials, or characteristics described in connection with the embodiment or example are included in at least one embodiment or example of the embodiments of the present application. In this specification, the schematic representations of the aforementioned terms do not necessarily refer to the same embodiment or example. Moreover, the described specific features, structures, materials, or characteristics may be combined in any suitable manner in one or more embodiments or examples. Furthermore, the terms "first," "second," and "third" are used for descriptive purposes only and should not be construed as indicating or implying relative importance. Additionally, without mutual contradiction, those skilled in the art may combine and integrate the different embodiments or examples described in this specification and the features of different embodiments or examples.

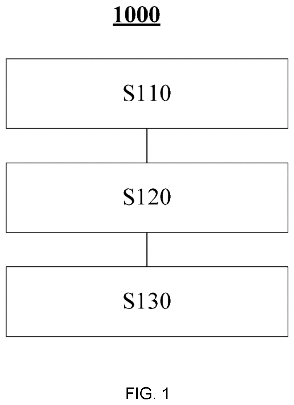

Fig. 1 shows a flowchart of a tube-based model predictive control trajectory planning method 1000 according to one embodiment of the present application. As shown in fig. 1, the method 1000 comprises the following steps:
in step S110, environmental information around the ego vehicle is collected, the environmental information comprising information related to obstacles;
in step S120, a ref tube representing the drivable space of the ego vehicle is generated, based at least on the ego vehicle's steering limitations and the predicted trajectory of the obstacle; and
in step S130, when solving the model predictive control optimization problem, the centerline of the ref tube is used as a reference value for the optimization problem, thereby generating a trajectory of the ego vehicle such that the ego vehicle can travel along the generated trajectory.

Model predictive control (MPC) is an advanced control strategy that determines the optimal control input by solving an optimization problem with a finite time horizon at each time step. The core idea of MPC is to predict system behavior over a future period of time based on the current state and the model at each sampling instant and to find the control sequence that optimizes performance indices through an optimization algorithm.

In the context of the present application, the tube-based MPC trajectory planning method 1000 improves solving efficiency by constructing a ref tube to narrow the feasible domain of the optimization problem. This method 1000 combines the advantages of global path planning and local path planning to ensure that the vehicle can maintain a safe distance while conforming to the vehicle's dynamic characteristics while driving.

In step S110, environmental information around the ego vehicle is collected. In the context of the present application, the term "ego vehicle" refers to a vehicle that is in motion and equipped with relevant sensors and control systems. For example, in autonomous driving technology, the ego vehicle perceives the surrounding environment through various sensors and makes corresponding driving decisions and control actions based on the perceived information. In one embodiment, the environmental information comprises obstacle-related information, such as location and speed (for determining the obstacle's location and speed of motion in the world coordinate system and predicting its future location), size and shape (for understanding the obstacle's size and shape and evaluating the spatial relationship between the vehicle and the obstacle), and category (for identifying the type of obstacle, such as a pedestrian, bicycle, automobile, etc.; different categories may require different response strategies).

In one or more embodiments, the environmental information around the ego vehicle may be obtained through sensor data. Sensors may comprise (but are not limited to) LiDAR, cameras, and radar. For example, LiDAR can acquire three-dimensional point cloud data of the surrounding environment by emitting laser beams and measuring the reflection time, thereby accurately identifying the obstacle's location and shape. Cameras can capture visual images and identify obstacles, lane lines, traffic signs, and traffic lights through image processing and computer vision technology. Radar can obtain the obstacle's distance and relative speed by emitting radio waves and measuring the reflection time.

In step S120, a ref tube representing the drivable space of the ego vehicle is generated, based at least on the ego vehicle's steering limitations and the predicted trajectory of the obstacle. Here, "steering limitations" refer to limitations of the vehicle's steering system's ability to operate while in motion. For example, steering limitations may comprise the following aspects:
(1) Maximum steering angle: The maximum turning angle of the vehicle's steering wheel or steered wheels. Exceeding this angle may cause the vehicle to lose control or damage the steering system; and
(2) Steering rate limitations: The maximum rate of change of the vehicle's steering angle. This limits the speed at which the vehicle can change direction per unit of time and affects the vehicle's maneuverability.

In other embodiments, the steering limitations may further comprise a minimum turning radius (i.e., the minimum radius at which the vehicle can turn) and a steering response time (i.e., the time required for the vehicle to start turning after receiving a steering instruction).

"Predicted trajectories of obstacles" refers to the prediction of the possible movement paths of surrounding obstacles (such as other vehicles, pedestrians, etc.) over a future period of time by analyzing and/or modeling their motion states. These predictions are critical to generating a safe, feasible vehicle trajectory, as they allow the autonomous driving system to plan ahead to avoid collisions with obstacles. In one embodiment, the predicted trajectory of an obstacle may be determined based on information such as its current location and speed. By taking into account the speed and direction of an obstacle's movement, its future position can be predicted, thereby assessing its potential threat to the ego lane.

In the context of the present application, a "ref tube" defines a space through which a vehicle can safely pass during operation, taking into account factors such as the vehicle's size and dynamic characteristics and obstacles in the surrounding environment to ensure that the vehicle can maintain a safe distance while conforming to the vehicle's dynamic characteristics during operation.

In one embodiment, the ref tube may be generated as follows:

### (1) Generate a hard tube

The hard tube is a first path region generated by scanning along a reference line, representing an initial path region through which the vehicle can safely pass. In one embodiment, scanning along a reference line to generate a hard tube may comprise: setting a start point and an end point for the scan, for example, from the vehicle's current position to a target position; progressively evaluating the distance between the vehicle and the road boundaries along the reference line to ensure that these distances are greater than a safe distance threshold for the vehicle; and determining the boundary points of the hard tube based on the evaluated distances, which define the region through which the vehicle can safely pass. In one embodiment, the hard tube is defined by physical round boundaries. For example, the width and shape of the hard tube may be determined based on the size of the vehicle, the safety margin, and the road boundary information. The width of the hard tube is generally set according to the width of the vehicle and the safety distance to ensure that the vehicle does not travel beyond the road boundaries while within the hard tube. In this way, the hard tube provides the most basic feasible path for the vehicle, ensuring that the vehicle does not exceed the road boundaries during travel.

### (2) Generate a soft tube

The soft tube is a second path region generated by adding lateral and longitudinal buffer zones to the hard tube, representing an expanded path region through which the vehicle can safely pass. In one embodiment, the soft tube may be generated by adding a buffer zone of a certain width to the hard tube, which may provide an additional safety margin. The width of the buffer zone may be dynamically adjusted according to the vehicle's speed, dynamic characteristics, and environmental complexity. The soft tube adds an additional safety margin to ensure that the vehicle has sufficient space for obstacle avoidance and path adjustment even in complex environments.

### (3) Generate a ref tube

The ref tube is a final path region generated based on the soft tube in combination with the vehicle's steering limitations and the predicted trajectories of obstacles and represents a final path region through which the vehicle can safely pass. In one embodiment, the ref tube may be generated by further refining and adjusting the soft tube in combination with the vehicle's steering limitations (e.g., maximum steering angle and minimum turning radius) and the predicted trajectories of obstacles (e.g., the minimum distance between the obstacles and the vehicle and the predicted trajectories of the obstacles). The width and shape of the ref tube will vary dynamically depending on these factors to ensure that the vehicle can maintain a safe distance while conforming to the vehicle's dynamic characteristics while driving. In this embodiment, the ref tube provides a final feasible domain to ensure that the vehicle can maintain a safe distance while conforming to the vehicle's dynamic characteristics while driving.

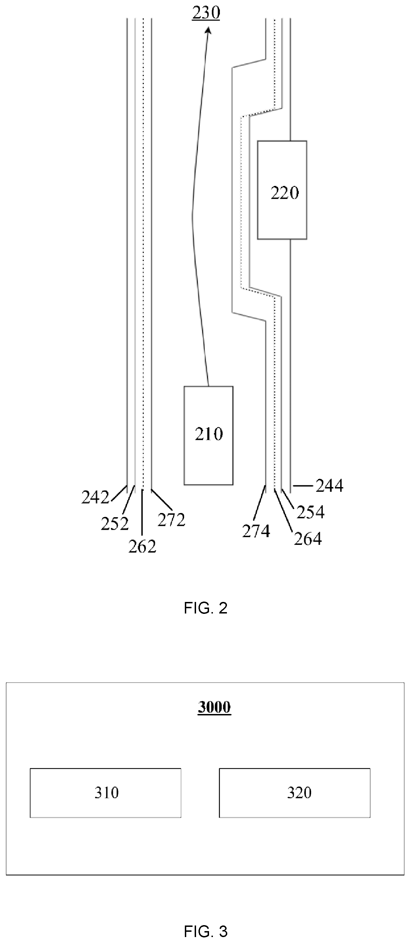

Referring to fig. 2, it shows a schematic diagram of a hard tube, a soft tube, and a ref tube according to one embodiment of the present application. As shown in fig. 2, the ego vehicle 210 is traveling in a lane formed by lane lines 242 and 244, with an obstacle 220 present in front of it (to the right). A hard tube (defined by lines 252 and 254 in fig. 2) is generated by scanning along a reference line. The hard tube represents a first path region through which the ego vehicle can safely pass. Based on the hard tube defined by lines 252 and 254, a soft tube (defined by lines 262 and 264 in fig. 2) is generated by adding lateral and longitudinal buffer zones. The soft tube represents a second path region through which the ego vehicle can safely pass. It can be seen from fig. 2 that the second path region is smaller than the first path region. Finally, based on the soft tube defined by lines 262 and 264 and considering the effects of the ego vehicle's steering limitations and the predicted trajectory of the obstacle, a ref tube (defined by lines 272 and 274 in fig. 2) is generated. The ref tube represents a third path region through which the ego vehicle can safely pass. The third path region is smaller than the second path region. In this way, when solving the optimization problem of model predictive control in subsequent steps, the centerline of the ref tube (not shown in fig. 2) is used as a reference value for the optimization problem, thereby generating the trajectory 230 of the ego vehicle.

In one or more embodiments, the reference line is generated based on lane boundaries perceived by sensors. For example, the reference line is generated using a path planning algorithm (e.g., polynomial fitting) based on the perceived lane boundaries. The reference line is the path the vehicle needs to follow while driving, typically represented as a smooth curve or polyline. In path planning, the reference line provides the vehicle with a direction of travel and a path datum. It ensures that the vehicle drives in the correct lane and serves as the basis for generating the hard tube, the soft tube, and the ref tube.

While driving, the vehicle updates sensor data in real time and dynamically adjusts the reference line according to changes in the environment. For example, when an obstacle or traffic congestion is detected in the lane ahead, the system can replan the reference line to guide the vehicle to change lanes in advance or take other avoidance measures.

In addition, since model predictive control algorithms consider only the optimization problem within a finite time range at each time step, which may cause the vehicle to get stuck in a local optimum rather than a global optimum, in one embodiment, the tube-based model predictive control trajectory planning method 1000 relies on a reference line provided by global path planning to generate hard tubes, soft tubes, and ref tubes, thereby obtaining a globally optimal solution.

In step S130, when solving the model predictive control optimization problem, the centerline of the ref tube is used as a reference value for the optimization problem, thereby generating a trajectory of the ego vehicle.

In an MPC optimization problem, the centerline of the ref tube provides the ideal path that the vehicle should follow for the optimization algorithm. By using the centerline of the ref tube as a reference value for the optimization problem, the optimization algorithm attempts to bring the planned trajectory of the vehicle as close as possible to the centerline while satisfying various constraints.

In one embodiment, the objective of the MPC optimization problem is to minimize an objective function (also referred to as a "cost function") that consists of the following parts:
(1) Position error term: Measures the deviation between the vehicle's current position and a reference value (the center line of the ref tube). This ensures that the vehicle's trajectory is as close as possible to the reference path;
(2) Steering rate change term: Measures changes in the vehicle's steering rate to ensure smooth steering actions and avoid abrupt steering changes;
(3) Environmental constraint term: Considers the distance between the vehicle and the surrounding environment (such as obstacles) to ensure that the vehicle travels within a safe range;
(4) Acceleration constraint term: Measures changes in the vehicle's acceleration to ensure that the vehicle's acceleration is within a safe and comfortable range.

In the optimization problem, in addition to the objective function, a series of constraints must be satisfied to ensure that the vehicle's motion is safe and feasible. Specifically, these constraints may comprise:
(1) Dynamic constraints: Ensure that the vehicle's motion conforms to its dynamic model; that is, changes in the vehicle's motion state conform to physical laws;
(2) Steering actuator limitations: Ensure that the vehicle's steering angle and steering rate are within the actuator's capabilities and avoid exceeding the physical limitations of the steering system;
(3) Acceleration constraint: Ensure that the vehicle's acceleration and deceleration are within a safe and comfortable range, avoiding excessive acceleration or deceleration; and
(4) Environmental constraints: Ensure that the vehicle maintains a sufficient safe distance from surrounding obstacles to avoid collisions.

By solving the above optimization problem, the optimal control input of the vehicle over a future period of time can be obtained, thereby generating the vehicle's trajectory. This trajectory will be as close as possible to the centerline of the ref tube while satisfying all constraints, ensuring that the vehicle maintains a safe distance while conforming to the vehicle's dynamic characteristics while driving.

In one embodiment, the objective function may be constructed as follows: ${\sum }_{k = 1}^{N} \left(\begin{matrix}{w}_{de} \left[k\right] ⋅ {\left(x\left[k\right]\left[1\right]-{de}_{ref}\left[k\right]\right)}^{2} + {w}_{pe} \left[k\right] ⋅ {\left(x\left[k\right]\left[2\right]-{pe}_{ref}\left[k\right]\right)}^{2} + \\ {w}_{rotate} \left[k\right] ⋅ {\left(δ\left[k\right]-δ\left[k-1\right]-rwa_rate_ref\left[k\right]\right)}^{2} + {w}_{env} ⋅ {\left({S}_{env}\left[k\right]\right)}^{2} + \\ {w}_{{env}_{{soft}_{left}}} \left[k\right] ⋅ {\left({S}_{{env}_{{soft}_{left}}}\left[k\right]\right)}^{2} + {w}_{{env}_{{soft}_{right}}} \left[k\right] ⋅ {\left({S}_{{env}_{{soft}_{right}}}\left[k\right]\right)}^{2} + \\ {w}_{{accel}_{min}} \left[k\right] ⋅ {\left({S}_{accel _ min}\left[k\right]\right)}^{2} + {w}_{{accel}_{max}} \left[k\right] ⋅ {\left({S}_{accel _ max}\left[k\right]\right)}^{2}\end{matrix}\right) ,$

In the above objective function, the position error term comprises: *w_{de}*[*k*] · (*x*[*k*][1] *- de_{ref}*[*k*])² *+ wₚₑ*[*k*] · (*x*[*k*][2] *- pe_{ref}*[*k*])², wherein *w_{de}*[*k*] is the weighting coefficient and is used to balance the importance of the longitudinal position error in the objective function. For example, a larger weight value indicates that the longitudinal position error is more important in the optimization problem, and the optimization algorithm will work harder to reduce the longitudinal position error. *x*[*k*][1] represents the actual longitudinal position of the vehicle, i.e., the longitudinal position of the vehicle at time step k; *de_{ref}*[*k*] represents the desired longitudinal position, i.e., the longitudinal position the vehicle should reach at time step k, which may be determined based on the centerline of the ref tube. Similarly, *wₚₑ*[*k*] is the weighting coefficient and is used to balance the importance of the lateral position error in the objective function. For example, a larger weight value indicates that the lateral position error is more important in the optimization problem, and the optimization algorithm will work harder to reduce the lateral position error. *x*[*k*][2] represents the actual lateral position of the vehicle, i.e., the lateral position of the vehicle at time step k; *pe_{ref}*[*k*] represents the desired lateral position, i.e., the lateral position the vehicle should reach at time step k, which may be determined based on the centerline of the ref tube.

The steering rate change term is: *wᵣₒₜₐₜₑ*[*k*] · (*δ*[*k*] - *δ*[*k* - 1] - *rwa_rate_ref*[*k*])², which is used to measure the deviation between the change in the vehicle's steering rate at time step k and the desired change in the steering rate. *wᵣₒₜₐₜₑ*[*k*] is the weighting coefficient and is used to balance the importance of the steering rate change term in the objective function. For example, a larger weight value indicates that the steering rate change is more important in the optimization problem, and the optimization algorithm will work harder to reduce the steering rate change. *δ*[*k*] represents the actual steering angle of the vehicle at time step k; *δ*[*k* - 1] represents the actual steering angle of the vehicle at time step k-1; *rwa_rate_ref*[*k*] represents the desired change in the steering rate, which serves as a reference value for the vehicle's steering rate change at time step k and is used to calculate the deviation between the actual steering rate change and the desired value. In one or more embodiments, *rwa_rate_ref*[*k*] may be determined based on the centerline of the ref tube and/or a vehicle dynamics model.

The environmental constraint term ${w}_{env} ⋅ {\left({S}_{env}\left[k\right]\right)}^{2} + {w}_{{env}_{{soft}_{left}}} \left[k\right] ⋅ {\left({S}_{{env}_{{soft}_{left}}}\left[k\right]\right)}^{2} + {w}_{{env}_{{soft}_{right}}} \left[k\right] ⋅ {\left({S}_{{env}_{{soft}_{right}}}\left[k\right]\right)}^{2}$ is used to measure the distance constraint between the vehicle and the surrounding environment (e.g., obstacles) at time step k. *wₑₙᵥ*, ${w}_{{env}_{{soft}_{left}}} \left[k\right]$, and ${w}_{{env}_{{soft}_{right}}} \left[k\right]$ are all weighting coefficients, which are used to balance the importance of the environmental constraint term, the left soft environmental constraint term, and the right soft environmental constraint term in the objective function, respectively. *Sₑₙᵥ*[*k*] is a slack variable that represents the distance slack between the vehicle and the surrounding environment (e.g., obstacles) at time step k. It is used to handle soft constraints and allow slight violations of constraints in infeasible situations. Similarly, ${S}_{{env}_{{soft}_{left}}} \left[k\right]$ is a slack variable that represents the distance slack between the vehicle and the left environment at time step k. It is used to handle left soft constraints and allow slight violations of constraints in infeasible situations. ${S}_{{env}_{{soft}_{right}}} \left[k\right]$ is a slack variable that represents the distance slack between the vehicle and the right environment at time step k. It is used to handle right soft constraints and allow slight violations of constraints in infeasible situations.

The acceleration constraint term is *w_{accelmin}[k]* · (*S_{accel_min}*[*k*])² + *w_{accelmax}[k]* · (*S_{accel_max}*[*k*])², where *w_{accelmin}[k]*and *w_{accelmax}[k]* are both weighting coefficients that are used to balance the importance of the minimum acceleration constraint term and the maximum acceleration constraint term in the objective function, respectively. *S_{accel_min}*[*k*] and *S_{accel_max}*[*k*] are both slack variables, which represent the slack of the vehicle's minimum acceleration constraint and the slack of the maximum acceleration constraint at time step k, respectively. They are used to handle soft constraints and allow slight violations of constraints in infeasible situations.

In one embodiment, the constraints comprise:
(1) Dynamic constraints, used to ensure that the vehicle's motion state conforms to its dynamic model, for example: x[k] = A[k - 1] · x[k - 1] *+ B_{δ}*[*k -* 1] · (δ[k - 1] + δ[k]) *+ B_{κ}*[*k -* 1] · (κ[k - 1] + κ[k]),
   wherein x[k] represents the state vector of the vehicle at time step k, typically comprising position, speed, steering angle, etc.; A[k - 1] is a state transition matrix that describes the linear change of the vehicle state; *B_{δ}*[*k -* 1] and *B_{κ}*[*k -* 1] are input matrices that describe the effect of control inputs on the vehicle state; δ[k - 1] and δ[k] represent the steering angles at time steps k-1 and k, respectively; and κ[k - 1] and κ[k] represent the curvatures at time steps k-1 and k, respectively.
(2) Steering actuator limitations, used to ensure that the steering angle of the vehicle is within the capabilities of the actuator, for example: -*δₘₐₓ*[k] ≤ δ[k] ≤ *δₘₐₓ*[k], wherein *δₘₐₓ*[k] represents the maximum steering angle at time step k;
(3) Steering rate change constraints, used to limit the rate of change of the vehicle's steering angle and ensure the smoothness of steering actions, for example: slew_min [k] ≤ δ[k] - δ[k - 1] ≤ slew_max [k] , wherein slew_min [k] and slew_max[k] represent the minimum and maximum steering rate changes at time step k, respectively;
(4) Acceleration constraints, used to ensure that the vehicle's acceleration is within a safe and feasible range, for example: accelₘᵢₙ[1] - *S_{accel_min}*[1] ≤ δ[1] - δ[0] - slew₀ ≤ accel*ₘₐₓ*[1] + *S_{accel_max}*[1] and accelₘᵢₙ[k + 1] - *S_{accel_min}*[k + 1] ≤ δ[*k* + 1] - 2 · δ[k] + δ[*k* - 1] ≤ accel*ₘₐₓ*[k + 1] + *S_{accel_max}*[k + 1], wherein accelₘᵢₙ[k] and accelₘₐₓ[k] represent the minimum and maximum acceleration at time step k, respectively; *S_{accel_min}*[k] and *S*_{*accel_m*ax}[k] represent the acceleration constraint slack variables at time step k, respectively; and slew₀ represents the reference value of the steering rate change or acceleration at the initial time (time step 0);
(5) Environmental constraints, used to ensure a safe distance between the vehicle and the surrounding environment (such as obstacles), for example: H*ₑₙᵥ* · *x*[*k*] ≤ *Gₑₙᵥ*(*k*) *+ Sₑₙᵥ*(*k*), wherein *Hₑₙᵥ* is the environmental constraint matrix, *Gₑₙᵥ*(*k*) is the environmental constraint vector at time step k, and *Sₑₙᵥ*(*k*) is the environmental constraint slack variable at time step k;
(6) Left soft environmental constraints, used to ensure a safe distance between the vehicle and the left environment, allowing slight violations of the constraints, for example: H_{*env*_soft_left} · *x*[*k*] ≤ *G_{env_soft_left}*(*k*) + *S_{env_soft_left}*(*k*), wherein H_{*env_*soft_left} is the left soft environmental constraint matrix, *G_{env_soft_left}*(*k*) is the left soft environmental constraint vector at time step k, and *S_{env_soft_left}*(*k*) is the left soft environmental constraint slack variable at time step k;
(7) Right soft environmental constraints, used to ensure a safe distance between the vehicle and the right environment, allowing slight violations of the constraints, for example: H_{*env_*soft_right} · *x*[*k*] ≤ *G_{env_soft_right}*(*k*) *+ S_{env_soft_right}*(*k*), wherein H_{*env*_soft_right} is the right soft environmental constraint matrix, *G_{env_soft-right}*(*k*) is the right soft environmental constraint vector at time step k, and *S_{env_soft_right}*(*k*) is the right soft environmental constraint slack variable at time step k;

In the above embodiment, the objective function of the optimization problem integrates position error, steering rate change, environmental constraints, acceleration constraints, and the like and balances different objectives through reasonable weighting coefficients to achieve multi-objective optimization. For example, by optimizing steering rate change and acceleration change, frequent steering of the vehicle during driving is reduced, improving passenger comfort. In addition, slack variables are introduced when solving optimization problems, allowing for slight violations of constraints in infeasible situations, thus ensuring that a feasible solution can be found for the optimization problem.

Furthermore, it is easily understood by those skilled in the art that the tube-based model predictive control trajectory planning method 1000 provided by one or more embodiments of the present application can be implemented by a computer program. For example, the computer program is contained in a computer program product. When the computer program is executed by a processor, it implements the tube-based model predictive control trajectory planning method 1000 of one or more embodiments of the present application. As another example, when a computer-readable storage medium (e.g., a USB flash drive) storing the computer program is connected to a computer, running the computer program executes the tube-based model predictive control trajectory planning method 1000 of one or more embodiments of the present application.

The above trajectory planning method 1000 may be applied to various autonomous driving functions. In one embodiment, the above trajectory planning method 1000 may be applied to an adaptive cruise control function. For example, methods of adaptive cruise control may comprise: receiving environmental information of the ego vehicle from a plurality of sensors; performing the tube-based model predictive control trajectory planning method 1000 based on the environmental information; and providing the planned trajectory to lateral and longitudinal actuators for the purpose of lateral and longitudinal control of the ego vehicle.

Referring to fig. 3, it shows a schematic structural diagram of an electronic device 3000 according to one embodiment of the present application. As shown in fig. 3, the electronic device 3000 comprises a memory 310 and a processor 320, the memory 310 having a computer program stored thereon. In one embodiment, the processor 320 executes the computer program to implement the following functions or steps: receiving environmental information of the ego vehicle from a plurality of sensors; performing the tube-based model predictive control trajectory planning method 1000 described above based on the environmental information; and providing the planned trajectory to lateral and longitudinal actuators for the purpose of control of the ego vehicle. In one or more embodiments, the electronic device may be a domain controller, camera, or radar.

In summary, in the tube-based model predictive control trajectory planning solution of the present application, the influence of vehicle dynamic constraints and the predicted trajectories of obstacles is considered in the process of constructing tubes (such as the ref tube). This ensures that the vehicle will not collide with obstacles during driving while narrowing the feasible domain of the optimization problem, thereby quickly generating a collision-free trajectory that meets the dynamic constraints.

In one or more embodiments, solving efficiency is improved by generating hard tubes, soft tubes, and ref tubes to gradually reduce the feasible domain of the optimization problem and reduce the search space of the optimization problem. A smaller feasible domain means that the complexity of the optimization problem is reduced, allowing the solver to more efficiently find the optimal path that satisfies all constraints and meets real-time requirements.

The above examples primarily illustrate the trajectory planning solution of the embodiments of the present application. Although only some of the embodiments of the present application have been described, it should be understood by those with ordinary skill in the art that the present application may be implemented in various other forms without departing from its spirit and scope. Therefore, the examples and embodiments presented are illustrative rather than limiting, and the present application may encompass various modifications and replacements without departing from the spirit and scope defined by the various claims.

## Claims

1. A tube-based model predictive control trajectory planning method, wherein the method comprises:
collecting environmental information around the ego vehicle, the environmental information comprising information related to obstacles;
generating a ref tube representing the drivable space of the ego vehicle, based at least on the ego vehicle's steering limitations and the predicted trajectory of the obstacle; and
when solving the model predictive control optimization problem, using the centerline of the ref tube as a reference value for the optimization problem, thereby generating a trajectory of the ego vehicle such that the ego vehicle can travel along the generated trajectory.

2. The method according to claim 1, wherein generating a ref tube representing the drivable space of the ego vehicle by combining the ego vehicle's steering limitations and the predicted trajectories of the obstacles comprises:
scanning along a reference line to generate a hard tube, wherein the hard tube represents a first path region through which the ego vehicle can safely pass, the first path region being defined by physical round boundaries;
generating a soft tube based on the hard tube by adding lateral and longitudinal buffer zones, wherein the soft tube represents a second path region through which the ego vehicle can safely pass and the second path region is smaller than the first path region; and
generating a ref tube based on the soft tube while considering the influence of the ego vehicle's steering limitations and the predicted trajectories of the obstacles, wherein the ref tube represents a third path region through which the ego vehicle can safely pass and the third path region is smaller than the second path region.

3. The method according to claim 2, wherein the environmental information further comprises lane boundaries perceived by sensors and the reference line is generated based on the lane boundaries.

4. The method according to claim 1 or 2, wherein the obstacle-related information comprises the location and speed of the obstacles and the predicted trajectories of the obstacles are determined based on the location and speed.

5. The method according to claim 1, wherein the optimization problem of the model predictive control is to minimize an objective function while satisfying constraints.

6. The method according to claim 5, wherein the objective function consists of a position error term, a steering rate change term, an environmental constraint term, and an acceleration constraint term, and the constraint conditions comprise dynamic constraints, steering actuator limitations, acceleration constraints, and environmental constraints.

7. The method according to claim 1, wherein the environmental information is received from a plurality of sensors and further comprises:
providing the generated trajectory of the ego vehicle to lateral and longitudinal actuators to control the ego vehicle.

8. A computer program product, comprising a computer program, wherein the computer program, when executed by a processor, implements the method according to any one of claims 1 to 7.

9. An electronic device, comprising a memory, a processor, and a computer program stored on the memory, wherein the processor executes the computing program to implement the method according to any one of claims 1 to 7.

10. The electronic device according to claim 9, wherein the electronic device is a domain controller, camera, or radar.
